# EUROPEAN PATENT SPECIFICATION

(11) **EP 3 611 070 B1**
(45) Date of publication and mention of the grant of the patent: **12.06.2024**
(21) Application number: 17935864.3
(22) Date of filing: 28.12.2017
(51) Int. Cl.: B61D 27/00, B61D 17/12, B60H 1/00

(54) **RAIL TRAIN AND UNITARY AIR CONDITIONING UNIT COMPLETE EQUIPMENT THEREOF**
SCHIENENZUG UND EINHEITLICHE KLIMAANLAGENKOMPLETTAUSSTATTUNG DAVON
TRAIN DE RAILS ET SON ÉQUIPEMENT COMPLET D'UNITÉ DE CLIMATISATION UNITAIRE

(30) Priority: 27.12.2017 CN 201711446472; 27.12.2017 CN 201721869299 U
(43) Date of publication of application: 19.02.2020
(73) Proprietor: CRRC Changchun Railway Vehicles Co., Ltd., Changchun, Jilin 130000 (CN)
(72) Inventor: WANG, Lei, Changchun, Jilin 130000 (CN); CAO, Yanhua, Changchun, Jilin 130000 (CN); ZHAO, Jinlong, Changchun, Jilin 130000 (CN); LI, Changsheng, Changchun, Jilin 130000 (CN); YU, Jiaxuan, Changchun, Jilin 130000 (CN)
(74) Representative: Laufhütte, Dieter
(86) International application number: PCT/CN2017/119328
(87) International publication number: WO 2019/127202

(56) References cited:
- EP-A1- 0 253 979
- CN-A- 102 009 660
- CN-A- 104 787 068
- CN-A- 106 379 354
- CN-U- 204 037 575
- CN-U- 204 403 390
- JP-A- 2007 192 416

## Description

The application claims the priorities to Chinese patent application No. titled "RAIL TRAIN AND UNITARY AIR CONDITIONING UNIT COMPLETE EQUIPMENT THEREOF" and Chinese patent application No. titled "RAIL TRAIN AND UNITARY AIR CONDITIONING UNIT COMPLETE EQUIPMENT THEREOF", filed with the China National Intellectual Property Administration on December 27, 2017.

### FIELD

This application relates to the field of railway trains, and in particular to a unitary air conditioning unit of a railway train. Moreover, the present application further relates to a railway train having said unitary air conditioning unit.

### BACKGROUND

In order to improve the riding comfort, a railway vehicle is generally provided with an air conditioning system. The air conditioning system is used for providing warm air (in winter) and cold air (in summer) to a car, so as to meet the comfort requirement. A multiple-unit train should further be provided with a pressure wave protection device for preventing sharp pressure fluctuation in the car from affecting the comfort when a high-speed vehicle enters a tunnel. An air conditioning unit of a conventional railway train is mostly in an overhead manner or a semi-embedded manner and has a top portion protruding from a vehicle body, which causes the running resistance of the train to be increased when the train runs at a high speed, and sealing between the vehicle body and the air conditioning unit is poor, thus it is inconvenient to mount and position the air conditioning unit and a large installation error is present. When the speed of the vehicle is increased and the vehicle passes through the tunnel, a pressure fluctuation may be generated outside the vehicle and transmitted into the car via an air vent of the air conditioning unit, thereby adversely affecting the comfort.

CN106379354A discloses a sinking style air conditioner mounting structure of a railway passenger vehicle, and belongs to the field of structural designs of vehicle bodies of railway vehicles. According to the sinking style air conditioner mounting structure of the railway passenger vehicle, an air conditioner mounting well is formed in the top end of a vehicle body; a mounting beam and an air return hole are arranged at the top end of the air conditioner mounting well; a side top plate is arranged at the side edge end of the air conditioner mounting well; an air conditioner mounting frame is arranged at the top end of the side top plate; a cavity for accommodating air conditioner equipment is formed in the side top plate and the air conditioner mounting frame; the air conditioner equipment is placed into the cavity in a sinking manner; and the air conditioner equipment is fixed on the air conditioner mounting frame.

Therefore, a technical issue to be addressed by the person skilled in the art currently is to overcome the disadvantages of a conventional set of apparatus for a unitary air conditioning unit described above.

### SUMMARY

A unitary air conditioning unit for a railway train is provided according to the present application, which can prevent a pressure fluctuation outside the vehicle from affecting the comfort in the vehicle, reduces the resistance, improves the sealing performance, facilitates the installation, meets strength and rigidity requirements, and increases a response speed of a pressure wave protection device. A railway train including the above set of apparatus for the unitary air conditioning unit is further provided according to the present application.

In order to address the above technical issue, a unitary air conditioning unit of a railway train is provided according to the present application, and the unitary air conditioning unit includes a set of apparatus for the unitary air conditioning unit of a railway train, which has an integrated structure and includes a body, a mounting base and a mixed air tank. The mounting base is provided at a periphery of a top portion of the body. The mixed air tank is provided at each of two sides of the body. A unitary air conditioning unit is mounted to an air conditioning unit mounting opening of a top portion of the railway train by the mounting base in a manner of embedding and sinking. A sealing component is provided between the mounting base and a vehicle body. The mounting base is connected to the vehicle body by a connection member. A top surface of the unitary air conditioning unit is lower than or flush with a top portion of the vehicle body. The unitary air conditioning unit is provided with a grille-type pressure wave protection device and the grille-type pressure wave protection device is communicated with the body through the mixed air tank. The grille-type pressure wave protection device includes at least one ventilation board, at least one grille air port, at least one strip-shaped sealing member and a driver. The grille air port is provided in the ventilation board. The at least one strip-shaped sealing member corresponds to the at least one grill air port one to one. The driver drives the at least one strip-shaped sealing member to move for closing the at least one grille air port. The set of apparatus for the unitary air conditioning unit further includes multiple grille air ports arranged on the ventilation board in sequence. The at least one strip-shaped sealing member is horizontally arranged and parallel to an extension direction of each of the at least one grille air port. The strip-shaped sealing member is provided below a corresponding grille air port and movable to close or to be separated from the corresponding grille air port. A mounting beam is provided at each of two sides of the mounting base. The mounting beam is provided with a mounting hole for connecting to the vehicle body by a bolt. The mounting beam is provided with the sealing component. A heat insulation board is provided at an outer periphery and a bottom surface of the mounting base.

Preferably, the driver includes a pneumatic cylinder and an electromagnetic valve. The electromagnetic valve actuates the pneumatic cylinder based on a command, and a telescopic end of the pneumatic cylinder drives the strip-shaped sealing member to move.

Preferably, the at least one grille air port includes a first grill air port located in a front half region of the ventilation board and a second grill air port located in a rear half region of the ventilation board. Pneumatic cylinders corresponding to the first grill air port and the second grille air port are respectively located below the first grill air port and the second grille air port and at substantially middle positions. Each of two pneumatic cylinders is connected to multiple strip-shaped sealing members by a connection plate.

Preferably, the strip-shaped sealing member is a rubber bar having a size slightly greater than a size of each of the grille air ports.

Preferably, the sealing component includes a first sealing strip, a second sealing strip and a third sealing strip. The first sealing strip is provided at an outer end of the mounting beam for sealing a connection part, connected to the vehicle body, of the outer end of the mounting beam. The second sealing strip is provided below the mounting hole for sealing a gap between the mounting hole and the bolt. The third sealing strip is provided at a lower end of a middle portion of the mounting beam for sealing a connection part, connected to the vehicle body, of the middle portion of the mounting beam.

A railway train is provided according to the present application and includes a vehicle body and a unitary air conditioning unit. The unitary air conditioning unit is mounted to the vehicle body. The unitary air conditioning unit is the unitary air conditioning unit according to any one of the above aspects.

The set of apparatus for the unitary air conditioning unit for the railway train is provided according to the present application, and the set of apparatus for the unitary air conditioning unit includes has an integrated structure and includes the body, the mounting base and the mixed air tank. The mounting base is provided at the periphery of the top portion of the body. The mixed air tank is provided at each of the two sides of the body. The unitary air conditioning unit is mounted to the air conditioning unit mounting opening of the top portion of the railway train by the mounting base in a manner of embedding and sinking. The sealing component is provided between the mounting base and the vehicle body. The mounting base is connected to the vehicle body by the connection member. The top surface of the unitary air conditioning unit is lower than or flush with a top portion of the vehicle body. The unitary air conditioning unit is provided with the grille-type pressure wave protection device and the grille-type pressure wave protection device is communicated with the body through the mixed air tank. The pressure wave protection device and other air conditioning components are all mounted in the mounting base and further connected, as a whole, to the vehicle body by the mounting base, thus, the structure manufacturability is good and improvement of the labor efficiency is facilitated. Leakage points are reduced by multiple seals, thus, the reliability of the system is ensured while ensuring the strength and rigidity requirements of installation and the sealing performance. When the pressure fluctuation occurs outside the vehicle, the driver may respond fast and drives the sealing member to close the air port to prevent the pressure fluctuation outside the vehicle from affecting the pressure in the vehicle, thereby improving the comfort.

The railway train including the above set of apparatus for the unitary air conditioning unit is further provided according to the present application. Since the set of apparatus for the unitary air conditioning unit has the technical effects described above, the above railway train should also have the same technical effects, which will not be described in detail herein.

### BRIEF DESCRIPTION OF THE DRAWINGS

Figure 1 is a schematic view showing the structure of an embodiment of a set of apparatus of a unitary air conditioning unit according to the present application;
Figure 2 is a schematic view showing the structure of a pressure wave protection device in the embodiment of the set of apparatus for the unitary air conditioning unit according to the present application;
Figure 3 is a schematic view showing the connection of the embodiment of the set of apparatus for the unitary air conditioning unit according to the present application;
Figure 4 is a partially enlarged view of a mounting beam in the embodiment of the set of apparatus for the unitary air conditioning unit according to the present application; and
Figure 5 is a schematic view showing the structure of a mixed air tank in the embodiment of the set of apparatus for the unitary air conditioning unit according to the present application.

**Reference Numerals in the figures:**

| | | | |
|---|---|---|---|
| 1. | mounting base, | 2. | cover plate, |
| 3. | grille air port, | 4. | strip-shaped sealing member, |
| 5. | pneumatic cylinder, | 6. | connection plate, |
| 7. | mounting beam, | 8. | first sealing strip, |
| 9. | second sealing strip, | 10. | third sealing strip, |
| 11. | mixed air tank, | 12. | body, |
| 13. | electromagnetic valve. | | |

### DETAILED DESCRIPTION OF EMBODIMENTS

A unitary air conditioning unit for a railway train is provided according to the present application, which can prevent pressure fluctuation outside the vehicle from affecting the comfort in the vehicle, reduces the resistance, improve the sealing performance, facilitate the installation, meet strength and rigidity requirements, and increase a response speed of a pressure wave protection device. A railway train including the above unitary air conditioning unit is further provided according to the present application.

In order to make the person skilled in the art have a better understanding of a solution of the present application, the present application is described hereinafter in further detail in conjunction with the drawings and embodiments.

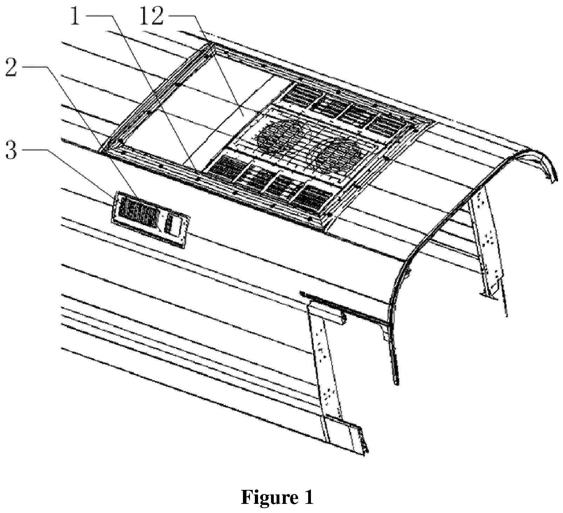

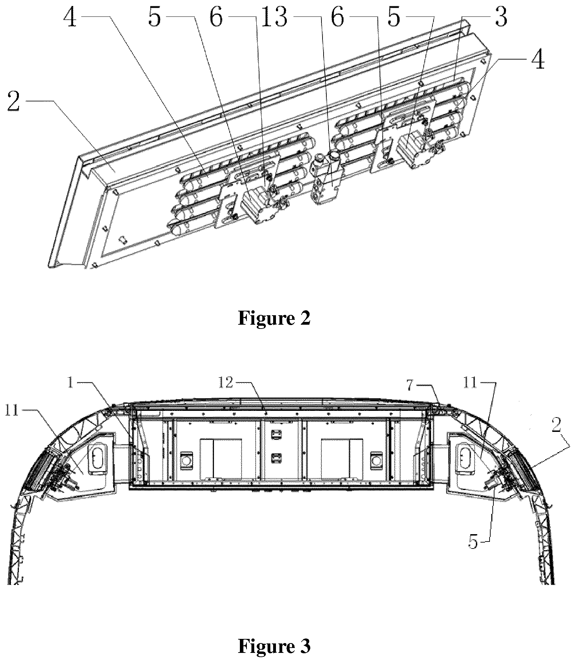

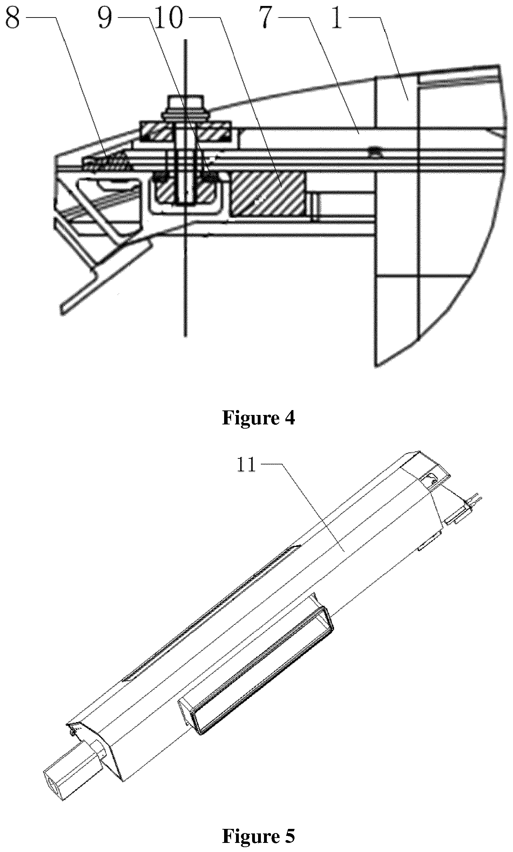

Reference is made to Figures 1 to 5. Figure 1 is a schematic view showing the structure of an embodiment of a set of apparatus of a unitary air conditioning unit according to the present application. Figure 2 is a schematic view showing the structure of a pressure wave protection device in the embodiment of the set of apparatus of the unitary air conditioning unit according to the present application. Figure 3 is a schematic view showing the connection of the embodiment of the set of apparatus of the unitary air conditioning unit according to the present application. Figure 4 is a partially enlarged view of a mounting beam in the embodiment of the set of apparatus of the unitary air conditioning unit according to the present application. Figure 5 is a schematic view showing the structure of a mixed air tank in the embodiment of the set of apparatus for the unitary air conditioning unit according to the present application.

The set of apparatus for the unitary air conditioning unit of the railway train is provided according to an embodiment of the present application, and the set of apparatus for the unitary air conditioning unit is an integrated structure. The set of apparatus for the unitary air conditioning unit includes a body 12 and a mounting base 1. The mounting base 1 is arranged at a periphery of a top portion of the body 12. A mixed air tank 11 is further provided at each of two sides of the body 12. A unitary air conditioning unit is mounted to an air conditioning unit mounting opening of a top portion of the railway train by the mounting base 1 in a manner of embedding and sinking. A sealing component is provided between the mounting base 1 and a vehicle body. The mounting base 1 is connected to the vehicle body by a connection member. A top surface of the unitary air conditioning unit is lower than a top portion of the vehicle body. The unitary air conditioning unit is provided with a grille-type pressure wave protection device and communicated with the body 12 through the mixed air tank 11.

The grille-type pressure wave protection device includes at least one ventilation board 2, at least one grille air port 3, at least one strip-shaped sealing member 4 and a driver. The grille air port 3 is provided on the ventilation board 2. The at least one strip-shaped sealing member 4 corresponds to the at least one grille air port 3 one to one. The ventilation board 2 is located at two sides of the unitary air conditioning unit. As shown in Figure 1, the ventilation board 2 is mounted to a side surface of the top portion of the vehicle body. The grille air port 3 in the ventilation board 2 is used for allowing the air conditioning unit to be communicated with the outside and allowing air circulation. In a normal state, the strip-shaped sealing member 4 is away from the grille air port 3, the air conditioning unit operates normally, air enters and exits via the grille air port 3. When the pressure fluctuation outside the vehicle becomes large, the driver may drive the strip-shaped sealing member 4 to move to the grille air port 3, so as to allow the strip-shaped sealing member 4 to close the grille air port 3, thereby preventing the pressure fluctuation outside the vehicle from affecting the pressure in the vehicle.

The grid-type pressure wave protection device and other air conditioning components are all mounted in the mounting base 1 and further connected, as a whole, to the vehicle body by the mounting base 1, thus, the structure manufacturability is good and improvement of the labor efficiency is facilitated. Leakage points are reduced by multiple sealing. Thus, the reliability of the system is ensured while ensuring the strength and rigidity requirements of installation and the sealing performance. When the pressure fluctuation occurs outside the vehicle, the driver may respond fast and drives the sealing member to close the air port to prevent the pressure fluctuation outside the vehicle from affecting the pressure in the vehicle, thereby improving the comfort.

Specifically, multiple grille air ports 3 may be provided in sequence on the ventilation board 2. The grille-type structure may effectively reduce an impact force of fast airflow outside, thereby further increasing the response speed of the pressure wave protection device. The arrangement of the multiple grille air ports 3 may be adjusted according to the situation. The multiple grille air ports 3 may be distributed at two ends of the ventilation board 2 in a length direction thereof or two ends of the ventilation board 2 in a width direction thereof, or other arrangements may be adopted, and each of the cases is within the protection scope of the present application.

When the multiple grille air ports 3 are provided, multiple strip-shaped sealing members 4 are provided individually and matched with the multiple grille air ports 3 respectively, that is, each of the grille air ports 3 is correspondingly provided with a corresponding strip-shaped sealing member 4. The strip-shaped sealing member 4 is horizontally arranged and parallel to an extension direction of each of the grille air ports 3. When the grille air ports 3 are required to be closed, the strip-shaped sealing member 4 is driven to move and contact with the grille air ports 3. A profile of the strip-shaped sealing member 4 is larger than a profile of each of the grille air ports 3, thus, the grille air ports 3 may be closed after the strip-shaped sealing member 4 and the grille air ports 3 come into contact with each other. By controlling the grille air ports 3 through the multiple strip-shaped sealing member 4, the response speed is faster and the sealing effect is better. Other types of sealing members may also be adopted. For example, an integrated plate-shaped sealing member may be adopted.

The strip-shaped sealing member 4 may be a rubber bar with a size being slightly greater than the size of each of the grille air ports 3 and having a certain elasticity, thus, the strip-shaped sealing member 4 may be partially squeezed into the grille air port 3 so as to improve the sealing effect, or other materials, such as a metal bar with an outer portion provided with a sealing layer may be adopted.

In the set of apparatus for the unitary air conditioning unit according to the embodiment of the present application, the driver may include a pneumatic cylinder 5 and an electromagnetic valve 13. After a command is received by the electromagnetic valve 13, the pneumatic cylinder 5 is actuated, and a telescopic end of the pneumatic cylinder 5 allows the strip-shaped sealing member 4 to move. In this way, a response speed of the pneumatic cylinder 5 is faster and a precise control is achieved. A step motor and the like structures may alternatively be adopted for driving.

The grille air ports 3 may specifically include a first grille air port located in a front half region of the ventilation board 2 and a second grille air port located in a rear half region of the ventilation board 2. Each of the first grille air port and the second grille air port is correspondingly provided with a corresponding pneumatic cylinder 5. Two pneumatic cylinders 5 are respectively located below the first grille air port and the second grille air port and at a middle position of the first grille air port and a middle position of the second grille air port. Each of the two pneumatic cylinders 5 is connected to multiple strip-shaped sealing members 4 by a connection plate 6, so as to allow the pneumatic cylinders 5 to drive the multiple strip-shaped sealing members 4 synchronously. The numbers and the arrangement of the components may also be adjusted according to the situation.

In the set of apparatus for the unitary air conditioning unit according to the embodiment of the present application, in order to facilitate stable connection of the mounting base 1, a mounting beam 7 is provided at each of two sides of the mounting base 1. The mounting beam 7 is provided with a mounting hole for connecting to the vehicle body by a bolt. By bolted connection of the mounting beam 7 to the vehicle body, detachment and replacement is facilitated. Moreover, the mounting beam 7 is provided with sealing strips. The sealing strips are arranged between the mounting beam 7 and the vehicle body to improve the sealing, thereby further improving the sealing performance of the air conditioning unit. A first sealing strip 8 is provided at an outer end of the mounting beam 7 and abuts against the vehicle body for sealing a connection part, connected to the vehicle body, of the outer end of the mounting beam 7. A second sealing strip 9 is provided below the mounting hole and used for sealing a gap between the mounting hole and the bolt. A third sealing strip 10 is provided at a lower end of a middle portion of the mounting beam 7 and abuts against a bolt connection seat of the vehicle body for sealing a connection part, connected to the vehicle body, of the middle portion of the mounting beam 7. The arrangement of the sealing strips may also be adjusted according to the situation. Moreover, in order to improve the heat insulation effect of the air conditioning unit, a heat insulation board may be provided at an outer periphery and a bottom surface of the mounting base 1. A double-layer heat insulation board may be further provided for further improving the heat insulation effect and achieving sound insulation and noise reduction.

The mounting base 1 is embedded into the vehicle body. A top portion of a cover plate 2 is located below a top surface of the vehicle body. That is, the air conditioning unit is hidden in the vehicle body and does not have a protruding portion. By embedded installation, the air conditioning unit matches perfectly with the top portion of the vehicle body in shape, thus, a streamlined design of a vehicle roof is achieved, thereby effectively reducing the running resistance.

Based on the set of apparatus for the unitary air conditioning unit according to the embodiment described above, a pressure sensor and a controller are provided in the mounting base 1. The pressure sensor is used for detecting the outside pressure fluctuation. The controller is communicatively connected to the pressure sensor, and the controller may control operation of the driver according to a detection result of the pressure sensor. When a large fluctuation in the outside pressure occurs and is detected by the pressure sensor and the pressure sensor sends a signal to the controller, a motion command is issued by the controller, the driver is activated and drives the sealing member to close the air port, which ensures the pressure in a passenger compartment to be stable, thereby meeting the comfort requirement of the vehicle and achieving automated fast control.

In addition to the set of apparatus for the unitary air conditioning unit described above, a railway train including the set of apparatus for the unitary air conditioning unit described above is further provided according to the embodiment of the present application. For the structures of other components of the railway train, reference may be made to the conventional technology, which will not be described herein.

The railway train and the set of apparatus for the unitary air conditioning unit therefor according to the present application are described in detail hereinbefore. The principle and the embodiments of the present application are illustrated herein by specific examples. The above description of examples is only intended to help the understanding of the concept of the present application. It should be noted that, for the person skilled in the art, a few of improvements and modifications may be made to the present application without departing from the scope of the present application as defined by the appended claims.

## Claims

1. A unitary air conditioning unit of a railway train, comprising a set of apparatus, which has an integrated structure and comprises:
a body (12),
a mounting base (1) provided at a periphery of a top portion of the body (12), and
a mixed air tank (11) provided at each of two sides of the body (12),
wherein the unitary air conditioning unit is configured to be mounted to an air conditioning unit mounting opening of a top portion of the railway train by the mounting base (1) in a manner of embedding and sinking, a sealing component is provided between the mounting base (1) and a vehicle body, the mounting base (1) is configured to be connected to the vehicle body by a connection member, a top surface of the unitary air conditioning unit thereby being lower than or flush with a top portion of the vehicle body, and a grille-type pressure wave protection device is provided at each of two sides of the unitary air conditioning unit and communicated with the body (12) through the mixed air tank (11),
wherein the grille-type pressure wave protection device comprises at least one ventilation board (2), at least one grille air port (3), at least one strip-shaped sealing member (4) and a driver, and, the grille air port (3) is provided in the ventilation board (2), the at least one strip-shaped sealing member (4) corresponds to the at least one grill air port (3) one to one, and the driver drives the at least one strip-shaped sealing member (4) to move for closing the at least one grille air port (3),
the set of apparatus for a unitary air conditioning unit further comprises a plurality of grille air ports (3) arranged on the ventilation board (2) in sequence,
wherein the at least one strip-shaped sealing member (4) is horizontally arranged and parallel to an extension direction of the at least one grille air port (3), and the strip-shaped sealing member (4) is provided below a corresponding grille air port (3) and movable to close or to be separated from the corresponding grille air port (3),
wherein a mounting beam (7) is provided at each of two sides of the mounting base (1), the mounting beam (7) is provided with a mounting hole for connecting to the vehicle body by a bolt, the mounting beam (7) is provided with the sealing component, and a heat insulation board is provided at an outer periphery and a bottom surface of the mounting base (1).

2. The unitary air conditioning unit according to claim 1, wherein the driver comprises a pneumatic cylinder (5) and an electromagnetic valve (13), the electromagnetic valve (13) actuates the pneumatic cylinder (5) based on a command, and a telescopic end of the pneumatic cylinder (5) allows the strip-shaped sealing member (4) to move.

3. The unitary air conditioning unit according to claim 1, wherein the at least one grille air port (3) comprises a first grill air port located in a front half region of the ventilation board (2) and a second grill air port located in a rear half region of the ventilation board (2), pneumatic cylinders (5) corresponding to the first grill air port and the second grille air port are respectively located below the first grill air port and the second grille air port and at a middle position of the first grill air port and at a middle position of the second grille air port, and each of two pneumatic cylinders (5) is connected to a plurality of strip-shaped sealing members (4) by a connection plate (6).

4. The unitary air conditioning unit according to claim 2, wherein the strip-shaped sealing member (4) is a rubber bar having a size slightly greater than a size of the grille air port (3).

5. The unitary air conditioning unit according to claim 1, wherein the sealing component comprises a first sealing strip (8), a second sealing strip (9) and a third sealing strip (10), the first sealing strip (8) is provided at an outer end of the mounting beam (7) for sealing a connection part, connected to the vehicle body, of the outer end of the mounting beam (7), the second sealing strip (9) is provided below the mounting hole for sealing a gap between the mounting hole and the bolt, and the third sealing strip (10) is provided at a lower end of a middle portion of the mounting beam (7) for sealing a connection part, connected to the vehicle body, of the middle portion of the mounting beam (7).

6. A railway train, comprising:
a vehicle body; and
a unitary air conditioning unit mounted to the vehicle body,
wherein the unitary air conditioning unit is a unitary air conditioning unit according to any one of claims 1 to 5.

## Patentansprüche

1. Einheitliche Klimaanlageneinheit eines Eisenbahnzuges, die eine Geräteanordnung aufweist, die eine integrierte Struktur aufweist und aufweist:
einen Körper (12),
eine Montagebasis (1), die an einem Umfang eines oberen Abschnitts des Körpers (12) vorgesehen ist, und
einen Mischluftbehälter (11), der auf jeder der beiden Seiten des Körpers (12) vorgesehen ist,
wobei die einheitliche Klimaanlageneinheit derart konfiguriert ist, dass sie an einer Klimaanlageneinheit-Befestigungsöffnung eines oberen Abschnitts des Eisenbahnzuges durch die Befestigungsbasis (1) derart montiert werden kann, dass sie einrastet und einsinkt, eine Dichtungskomponente zwischen der Befestigungsbasis (1) und einer Fahrzeugkarosserie vorgesehen ist, wobei die Befestigungsbasis (1) derart konfiguriert ist, dass sie mit dem Fahrzeugkörper durch ein Verbindungselement verbunden werden kann, eine obere Fläche der einheitlichen Klimaanlageneinheit dadurch niedriger als oder auf demselben Niveau wie ein oberer Abschnitt der Fahrzeugkarosserie ist, und eine gitterartige Druckwellenschutzvorrichtung auf jeder der beiden Seiten der einheitlichen Klimaanlage vorgesehen ist und über den Mischluftbehälter (11) mit der Karosserie (12) in Verbindung steht,
wobei die gitterartige Druckwellenschutzvorrichtung zumindest eine Lüftungsplatte (2), zumindest eine Gitterluftöffnung (3), zumindest ein streifenförmiges Dichtungselement ( 4) und einen Treiber aufweist, und die Gitterluftöffnung (3) in der Lüftungsplatte (2) vorgesehen ist, das zumindest eine streifenförmige Dichtungselement ( 4) der zumindest einen Gitterluftöffnung (3) eins zu eins entspricht, und der Treiber die Bewegung des zumindest einen streifenförmigen Dichtungselements ( 4) bewirkt, um die zumindest eine Gitterluftöffnung (3) zu schließen,
die Geräteanordnung für eine einheitliche Klimaanlageneinheit ferner eine Vielzahl von Gitterluftöffnungen (3) aufweist, die an der Lüftungsplatte (2) der Reihe nach angeordnet sind,
das zumindest eine streifenförmige Dichtungselement (4) horizontal und parallel zu einer Erstreckungsrichtung der zumindest einen Gitterluftöffnung (3) angeordnet ist, und das streifenförmige Dichtungselement (4) unter einer entsprechenden Gitterluftöffnung (3) vorgesehen ist und bewegbar ist, um die entsprechende Gitterluftöffnung (3) zu schließen oder von ihr getrennt zu werden,
wobei ein Montageträger (7) auf jeder der beiden Seiten der Montagebasis (1) vorgesehen ist, der Montageträger (7) mit einem Montageloch versehen ist, um mit dem Fahrzeugkörper durch eine Schraube verbunden zu werden, der Montageträger (7) mit der Dichtungskomponente versehen ist, und eine wärmeisolierende Platte an einem Außenumfang und einer unteren Oberfläche der Montagebasis (1) vorgesehen ist.

2. Einheitliche Klimaanlageneinheit nach Anspruch 1, wobei der Treiber einen pneumatischen Zylinder (5) und ein elektromagnetisches Ventil (13) umfasst, das elektromagnetische Ventil (13) den pneumatischen Zylinder (5) auf Grundlage eines Befehls betätigt und ein teleskopisches Ende des pneumatischen Zylinders (5) es dem streifenförmigen Dichtungselement (4) ermöglicht, sich zu bewegen.

3. Einheitliche Klimaanlageneinheit nach Anspruch 1, wobei die zumindest eine Gitterluftöffnung (3) eine erste Gitterluftöffnung, die sich in einem vorderen Halbbereich der Lüftungsplatte (2) befindet, und eine zweite Gitterluftöffnung, die sich in einem hinteren Halbbereich der Lüftungsplatte (2) befindet, aufweist, Pneumatikzylinder (5), die der ersten Gitterluftöffnung und der zweiten Gitterluftöffnung entsprechen, jeweils unter der ersten Gitterluftöffnung und der zweiten Gitterluftöffnung und an einer mittleren Position der ersten Gitterluftöffnung und an einer mittleren Position der zweiten Gitterluftöffnung angeordnet sind, und jeder der beiden Pneumatikzylinder (5) mit einer Vielzahl von streifenförmigen Dichtungselementen (4) durch eine Verbindungsplatte (6) verbunden ist.

4. Einheitliche Klimaanlageneinheit nach Anspruch 2, wobei das streifenförmige Dichtungselement (4) ein Gummistab ist, der eine Größe hat, die etwas größer ist als eine Größe der Gitterluftöffnung (3).

5. Einheitliche Klimaanlageneinheit nach Anspruch 1, wobei die Dichtungskomponente einen ersten Dichtungsstreifen (8), einen zweiten Dichtungsstreifen (9) und einen dritten Dichtungsstreifen (10) aufweist, der erste Dichtungsstreifen (8) an einem äußeren Ende des Montageträgers (7) zum Abdichten eines Verbindungsteils, der mit der Fahrzeugkarosserie verbunden ist, des äußeren Endes des Montageträgers (7), vorgesehen ist, der zweite Dichtungsstreifen (9) unter dem Montageloch vorgesehen ist, um einen Raum zwischen dem Montageloch und dem Bolzen abzudichten, und der dritte Dichtungsstreifen (10) an einem unteren Ende eines mittleren Abschnitts des Montageträgers (7) vorgesehen ist, um einen mit dem Fahrzeugkörper verbundenen Verbindungsabschnitt des mittleren Abschnitts des Montageträgers (7) abzudichten.

6. Eisenbahnzug, aufweisend:
eine Fahrzeugkarosserie; und
eine einheitliche Klimaanlageneinheit, die an der Fahrzeugkarosserie angebracht ist,
wobei die einheitliche Klimaanlageneinheit eine einheitliche Klimaanlageneinheit nach einem der Ansprüche 1 bis 5 ist.

## Revendications

1. Unité de climatisation unitaire d'un train ferroviaire, comprenant un ensemble d'appareils, qui a une structure intégrée et comprend :
un corps (12),
une base de montage (1) prévue à la périphérie d'une portion supérieure du corps (12), et
un réservoir d'air mélangé (11) prévu sur chacun des deux côtés du corps (12),
l'unité de climatisation unitaire étant configurée pour être montée sur une ouverture de montage d'unité de climatisation d'une portion supérieure du train ferroviaire par la base de montage (1) de manière à s'encastrer et à s'enfoncer, un composant d'étanchéité étant prévu entre la base de montage (1) et un corps de véhicule, la base de montage (1) étant configurée pour être reliée au corps de véhicule par un élément de liaison, une surface supérieure de l'unité de climatisation unitaire étant ainsi plus basse que ou au même niveau qu'une portion supérieure du corps de véhicule, et un dispositif de protection contre les ondes de pression de type grille étant prévu sur chacun des deux côtés de l'unité de climatisation unitaire et communiquant avec le corps (12) par l'intermédiaire du réservoir d'air mélangé (11),
le dispositif de protection contre les ondes de pression de type grille comprenant au moins un panneau de ventilation (2), au moins un orifice d'air de grille (3), au moins un élément d'étanchéité en forme de bande (4) et un pilote, et, l'orifice d'air de grille (3) étant prévu dans le panneau de ventilation (2), l'au moins un élément d'étanchéité en forme de bande ( 4) correspondant à l'au moins un orifice d'air de grille (3) un à un, et le pilote entraînant le déplacement de l'au moins un élément d'étanchéité en forme de bande ( 4) pour fermer l'au moins un orifice d'air de grille (3),
l'ensemble d'appareils pour une unité de climatisation unitaire comprenant en outre une pluralité d'orifices d'air de grille (3) disposés sur le panneau de ventilation (2) en séquence,
l'au moins un élément d'étanchéité en forme de bande (4) étant disposé horizontalement et parallèlement à une direction d'extension de l'au moins un orifice d'air de grille (3), et l'élément d'étanchéité en forme de bande (4) étant prévu sous un orifice d'air de grille correspondant (3) et mobile pour fermer ou être séparé de l'orifice d'air de grille correspondant (3),
une poutre de montage (7) étant prévue sur chacun des deux côtés de la base de montage (1), la poutre de montage (7) étant pourvue d'un trou de montage pour être reliée au corps de véhicule par un boulon, la poutre de montage (7) étant pourvue du composant d'étanchéité, et un panneau d'isolation thermique étant prévu sur une périphérie extérieure et une surface inférieure de la base de montage (1).

2. Unité de climatisation unitaire selon la revendication 1, le pilote comprenant un cylindre pneumatique (5) et une vanne électromagnétique (13), la vanne électromagnétique (13) actionnant le cylindre pneumatique (5) sur la base d'une commande, et une extrémité télescopique du cylindre pneumatique (5) permettant à l'élément d'étanchéité en forme de bande (4) de se déplacer.

3. Unité de climatisation unitaire selon la revendication 1, l'au moins un port d'air de grille (3) comprenant un premier port d'air de grille situé dans une demi-région avant du panneau de ventilation (2) et un deuxième port d'air de grille situé dans une demi-région arrière du panneau de ventilation (2), des cylindres pneumatiques (5) correspondant au premier port d'air de grille et au deuxième port d'air de grille étant respectivement situés sous le premier port d'air de grille et le deuxième port d'air de grille et à une position médiane du premier port d'air de grille et à une position médiane du deuxième port d'air de grille, et chacun des deux cylindres pneumatiques (5) étant relié à une pluralité d'éléments d'étanchéité en forme de bande ( 4) par une plaque de liaison (6).

4. Unité de climatisation unitaire selon la revendication 2, l'élément d'étanchéité en forme de bande (4) étant une barre en caoutchouc ayant une taille légèrement supérieure à une taille de l'orifice d'air de grille (3).

5. Unité de climatisation unitaire selon la revendication 1, le composant d'étanchéité comprenant une première bande d'étanchéité (8), une deuxième bande d'étanchéité (9) et une troisième bande d'étanchéité (10), la première bande d'étanchéité (8) étant prévue à une extrémité extérieure de la poutre de montage (7) pour étanchéifier une partie de liaison, reliée au corps de véhicule, de l'extrémité extérieure de la poutre de montage (7), la deuxième bande d'étanchéité (9) étant prévue sous le trou de montage pour étanchéifier un espace entre le trou de montage et le boulon, et la troisième bande d'étanchéité (10) étant prévue à une extrémité inférieure d'une portion médiane de la poutre de montage (7) pour étanchéifier une partie de liaison, reliée au corps de véhicule, de la portion médiane de la poutre de montage (7).

6. Train ferroviaire, comprenant :
un corps de véhicule ; et
une unité de climatisation unitaire montée sur le véhicule,
l'unité de climatisation unitaire étant une unité de climatisation unitaire selon l'une quelconque des revendications 1 à 5.
